(19) Europäisches Patentamt
European Patent Office
Office européen des brevets

(11) Veröffentlichungsnummer: **0 052 624**
**B1**

(12) # EUROPÄISCHE PATENTSCHRIFT

(45) Veröffentlichungstag der Patentschrift: **30.01.85**

(51) Int. Cl.[4]: **D 21 H 5/10**, B 41 M 3/14, G 06 K 19/00, G 07 D 7/00

(21) Anmeldenummer: **81901312.9**

(22) Anmeldetag: **29.05.81**

(86) Internationale Anmeldenummer: **PCT/DE 81/00078**

(87) Internationale Veröffentlichungsnummer: **WO/8103507 (10.12.81 Gazette 81/29)**

(54) **WERTPAPIER MIT ECHTHEITSMERKMALEN IN FORM VON LUMINESZIERENDEN SUBSTANZEN.**

(30) Priorität: **30.05.80 DE 3020600**
**13.06.80 DE 3022329**

(43) Veröffentlichungstag der Anmeldung: **02.06.82 Patentblatt 82/22**

(45) Bekanntmachung des Hinweises auf die Patenterteilung: **30.01.85 Patentblatt 85/05**

(84) Benannte Vertragsstaaten: **FR LU NL**

(56) Entgegenhaltungen:
**DE-A- 2 745 301**
**US-A- 3 473 027**
**US-A- 4 146 792**

(73) Patentinhaber: **GAO GESELLSCHAFT FÜR AUTOMATION UND ORGANISATION MBH**
**Euckenstrasse 12**
**D-8000 München 70 (DE)**

(72) Erfinder: **KAULE, Wittich**
**Germeringer Strasse 5**
**D-8035 Gauting (DE)**
Erfinder: **SCHWENK, Gerhard**
**Edelweissstrasse 20**
**D-8031 Puchheim (DE)**
Erfinder: **STENZEL, Gerhard**
**Schlessstättstrasse 6**
**D-8000 München 2 (DE)**

(74) Vertreter: **Kador . Klunker . Schmitt-Nilson . Hirsch**
**Corneliusstrasse 15**
**D-8000 München 5 (DE)**

**EP 0 052 624 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung bezieht sich auf ein Wertpapier mit Echtheitsmerkmalen in Form von lumineszierenden Substanzen auf der Basis von mit Seltenerdmetallen dotierten Wirtsgittern. Unter der Bezeichnung « Wertpapier » werden hier Banknoten, Scheckformulare, Aktien und Briefmarken sowie Ausweise, Kreditkarten, Scheckkarten, Pässe, Flugscheine und andere Urkunden und Dokumente verstanden.

Die Absicherung von Wertpapieren gegen Fälschung mittels lumineszierender Substanzen ist schon seit langem bekannt. Bereits in der DE-C-449 133 aus dem Jahre 1925 und der DE-C-497 037 aus dem Jahre 1926 wird das Einbringen von lumineszierenden Substanzen in Wertpapiere beschrieben, wobei die Luminophore mit ultravioletten oder anderen unsichtbaren Strahlen anregbar sind und im sichtbaren Bereich emittieren.

In den US-A-34 73 027 und 35 25 698 sind Luminophore und deren Verwendung als Codierfarben auf der Basis von mit Seltenerdmetallen dotierten Wirtsgittern, die gegebenenfalls koaktiviert sind, beschrieben, bei denen die Anregung im UV-Bereich und kurzwelligen sichtbaren Bereich und die Emission im sichtbaren oder IR-Bereich erfolgen kann, wobei die Emissionen im IR-Bereich zur Erweiterung des verwendbaren Spektralbereichs Verwendung finden.

Die in der DE-A-25 47 768 beschriebenen koaktivierten Ytterbium-Erbium Seltenerdmetall-Luminophore werden im IR-Bereich angeregt und emittieren im sichtbaren Bereich.

Die Verwendung von Luminophoren zur Absicherung von Datenträgern wird ferner in der DE-A-15 99 011 beschrieben sowie in der DE-A-29 03 073, wobei die dort beschriebenen Leuchtstoffe im IR-Bereich angeregt werden und emittieren.

In der Patentliteratur und der wissenschaftlichen Literatur wurden eine sehr große Anzahl verschiedener Seltenerdmetall-Luminophore beschrieben, die als Einkristalle für Festkörperlaser und andere Zwecke geeignet sind. Beispielsweise kann auf die US-A-34 47 851 und 34 80 877 hingewiesen werden, in denen Kristalle mit Granatstruktur für die Lasertechnik und für andere Zwecke beschrieben werden, jedoch die Absicherung von Wertpapieren mit Luminophoren nicht angesprochen ist.

Der Stand der Technik bezüglich der Absicherung von Wertpapieren mit lumineszierenden Substanzen läßt sich dahingehend zusammenfassen, daß die Anregung der Luminophore im nicht sichtbaren Bereich, d. h. im UV-Bereich, erfolgt, während die Emission im sichtbaren Spektrum entweder erwünscht ist oder als nicht störend angesehen wird.

Die Luminophore werden bei Wertpapieren als Papierzusätze, als Papiereinlagerungen, beispielsweise als Melierfasern oder Sicherheitsfäden oder in Druckfarben eingesetzt.

Es hat sich herausgestellt, daß bei der Absicherung von Wertpapieren mit Seltenerdmetall-Luminophoren wegen ihrer im folgenden beschriebenen Eigenschaften Schwierigkeiten auftreten. In neueren Veröffentlichungen werden daher meist « Datenkarten », d. h. im allgemeinen mehrschichtige Wertpapiere beschrieben, bei denen diese Schwierigkeiten, z. B. durch dicke Siebdruckschichten, Folieneinbettungen oder dergleichen, umgangen werden können.

So beschreibt DE-A-2 745 301 eine fluoreszenzkodierte Datenkarte. Die verwendeten Fluoreszenzstoffe werden mit IR-Licht angeregt und emittieren auch im IR ; sie sind mit Lanthanidionen dotierte Wolframate, Phosphate, Fluoride und Molibdate. Als Wirtsgitter wird auch der reine YAG erwähnt. Alle diese Verbindungen sind transparent und dämpfen deshalb die parasitären Emissionen nicht. Die Verwendung ausschließlich transparenter Wirtsgitter ist aus der Entwicklung der Luminophorphysik verständlich. Insbesondere für Laser sowie für im Sichtbaren breitbandig emittierende Luminophore war man natürlich an transparenten Wirtsgittern interessiert, damit das Lumineszenzlicht nicht durch das eigene Wirtsgitter gedämpft wird. Die DE-A-2 745 301 greift also auf Luminophore des Standes der Technik zurück und versucht, die Lumineszenzkodierung durch Abdecken mit einer blauen Folie unsichtbar zu halten. Es ist offensichtlich, daß man dieses Verfahren z. B. bei Banknoten nicht anwenden kann und daß es ferner den Mangel aufweist, wegen der gefärbten Folie auf die Kodierung hinzuweisen.

Schwierigkeiten bei der Absicherung von Wertpapieren, insbesondere Banknoten, mit Seltenerdmetall-Luminophoren ergeben sich durch deren Korngröße. In den bereits vorgenannten Druckschriften, nämlich der US-A-34 73 027 und der DE-A-25 47 768 werden Korngrößen von einigen $\mu$m aufwärts genannt. Für übliche Druckpigmente sind jedoch Korngrößen unter 1 $\mu$m erforderlich. Übliche bisher verwendete Seltenerdmetall-Luminophore weisen beim Zerkleinern unter einer bestimmten Korngröße keine ausreichende Effektivität mehr auf. Sie müssen daher in großen Mengen eingesetzt werden ; dies verursacht hohe Kosten und führt häufig zu nicht lösbaren technologischen Problemen, weil dazu die Grenze der Belastbarkeit der Druckfarbe mit Zusatzstoffen überschritten werden müßte.

Zur Umgehung dieser Schwierigkeiten bezüglich der Korngröße werden teilweise lösliche organische Seltenerdmetall-Luminophore beschrieben, die jedoch naturgemäß nicht die für den Banknotendruck erforderliche Lösungsmittelechtheit aufweisen. Bei der Absicherung von Wertpapieren wurde bisher bevorzugt Wert darauf gelegt, daß bei Anregung im UV- oder IR-Bereich Lumineszenz im sichtbaren Bereich auftritt oder in dem mit handelsüblichen Bildwandlern leicht zugänglichen nahen IR-Bereich. Bei der automatischen Echtheitserkennung von Wertpapieren stellt es jedoch einen zusätzlichen Sicherheitsfaktor dar, wenn die Absicherung nicht sichtbar ist oder es nicht möglich ist, diese mit üblichen Hilfsmitteln sichtbar zu machen.

In der DE-A-15 99 011 wurde zur Tarnung von Beschriftungen bereits das Abdecken mit einer Folie vorgeschlagen. Abgesehen davon, daß die Folie selbst sichtbar ist und damit auf den Ort der Beschriftung besonders hinweist, ist die Abdeckung mit Folien bei Banknoten und ähnlichen Wertpapieren unzweckmäßig.

Aufgabe der Erfindung ist die Schaffung von Wertpapieren mit einer Absicherung in Form von lumineszierenden Substanzen, die möglichst schwer erkennbar sind und insbesondere keine Emission im sichtbaren Spektralbereich zeigen und die in geringer Menge eingesetzt werden können.

Gegenstand der Erfindung ist ein Wertpapier mit lumineszierenden Substanzen auf der Basis von mit Seltenerdmetallen dotierten Wirtsgittern, das dadurch gekennzeichnet ist, daß das Wirtsgitter im wesentlichen im gesamten sichtbaren Bereich und gegebenenfalls zusätzlich im nahen IR absorbiert und in wesentlichen Teilen des sichtbaren oder des nahen IR-Bereichs anregbar ist und im IR einen optisch transparenten Bereich hat, in dem die Substanz ausschließlich emittiert.

Das Wirtsgitter enthält als absorbierenden Gitterbestandteil vorzugsweise ein Übergangsmetall, insbesondere ein Metall der Nebengruppen VI, VII und VIII des Periodischen Systems der Elemente. Besonders geeignet sind Kobalt, Nickel, Mangan und Eisen, wobei das Wirtsgitter vorzugsweise eine Perovskit- oder Granatstruktur aufweist.

Der optisch transparente Bereich oder das optische Fenster des Wirtsgitters liegt vorzugsweise zwischen 1,1 und 10 µm oder 0,8 und 10 µm.

Außerhalb des optischen Fensters und insbesondere im sichtbaren oder nahen IR-Bereich liegende Emissionen werden durch das Absorptionsverhalten des Wirtsgitters unterdrückt. Beispielsweise werden bei einem optischen Fenster von 1,1 bis 8 nm und einem Absorptionsbereich von 0,3 bis 1,1 nm alle Emissionslinien im sichtbaren Bereich und im nahen IR-Bereich, der mit einem handelsüblichen Bildwandler zugänglich ist, unterdrückt. Auf diese Weise ist sichergestellt, daß bei jedweder Anregung der Luminophore keine Emission im sichtbaren Bereich und dem leicht zugänglichen nahen IR-Bereich auftreten kann und somit die Absicherung absolut « unsichtbar » bzw. eine Mustererkennung auch bei Anwendung üblicher technischer Hilfsmittel nicht möglich ist.

Die Anwendung von Seltenerdmetall-Luminophoren mit im gesamten sichtbaren Bereich absorbierendem Gitter wurde bisher nur für Laser vorgeschlagen. Dieser Vorschlag fand jedoch keine technische Anwendung. Aus diesem Grund ist eine handelsübliche Verfügbarkeit der bei den erfindungsgemäßen Wertpapieren eingesetzten lumineszierenden Substanzen ausgeschlossen.

Der Anregungsbereich liegt im sichtbaren und gegebenenfalls zusätzlich im nahen IR. Dieser Bereich deckt sich mit dem Strahlungsbereich von starken Lichtquellen, wie Halogenlampen, Blitzlampen und Xenonbogenlampen. Aus diesem Grund können bei den erfindungsgemäßen Wertpapieren sehr geringe Stoffmengen eingesetzt werden. Wegen der geringen erforderlichen Stoffmengen ist eine Verarbeitung in für Wertpapieren üblichen Druckverfahren möglich. Weiterhin ist wegen der geringen Stoffmenge ein Nachweis, beispielsweise durch chemische Analyse, außerordentlich erschwert.

Bei üblichen « durchsichtigen », d. h. im sichtbaren wenig absorbierenden kristallinen Seltenerdmetall-Luminophoren sind für eine effektive Anregung und Emission verhältnismäßig große Kristalle erforderlich. Bei kleinen Korngrößen sinkt die Effektivität schnell ab und ist bei Korngrößen unter 1 µm auf unpraktikabel niedere Werte gesunken. Bei den in den erfindungsgemäßen Wertpapieren eingesetzten stark absorbierenden Seltenermetall-Luminophoren erfolgt die Anregung von Haus aus nur in einer vergleichsweise dünnen Schicht. Das Zerkleinern der Kristalle unter 1 µm vermindert daher die Effektivität nicht. Die Luminophore können aufgrund ihrer geringen Korngröße in Simultandruck- und Stahldruckfarben eingesetzt werden.

Die absorbierenden Wirtsgitterbestandteile können teilweise durch nichtabsorbierende Wirtsgitterbestandteile, wie beispielsweise Aluminium, Vanadium, Gallium und Indium substituiert werden. Die Eigenschaften der Unterdrückung von Lumineszenz im sichtbaren Bereich und das den starken Lichtquellen angepaßte Anregungsspektrum bleiben erhalten. Die Absorption des Stoffes wird geringer und dieser läßt sich daher auch als Zusatzstoff für hellere Farbtöne einsetzen. Die gegebenenfalls geringe Effektivität des weniger absorbierenden Luminophors wird durch die weniger störende Absorption des helleren Farbstoffes ausgeglichen. Dunkle Farben dagegen nehmen viel Anregungslicht weg, d. h. man braucht zur Absicherung derselben sehr effektive, stark absorbierende, dunkle Luminophore.

Weniger stark absorbierende Wirtsgitter, bei denen die absorbierenden Wirtsgitterbestandteile zum Teil durch nicht absorbierende Wirtsgitterbestandteile ersetzt sind, können auch bei Papierzusätzen verwendet werden. Hier sind helle Zusatzstoffe erwünscht, die sich bei der Abstimmung der Papierfarbe nicht störend bemerkbar machen. Da hier Korngrößen von 20 µm leicht eingearbeitet werden können, wird ein verminderter Absorptionskoeffizient durch die größeren Teilchendimensionen ausgeglichen.

Die absorbierte Strahlungsintensität $I_{abs}$ zur einfallenden Intensität $I_0$ verhält sich wie

$$I_{abs}/I_0 = 1 - e^{-ad}$$

a = Absorptionskoeffizient
d = Lichteindringtiefe

Aus der Gleichung folgt, daß bei einer Korngröße von 20 µm statt 1 µm ein um den Faktor 20 kleinerer Absorptionskoeffizient genügt, um pro Teilchen dieselbe Lichtmenge zu absorbieren.

Weniger stark absorbierende Wirtsgitter lassen gemäß obenstehender Gleichung bei dünnen Schichten das meiste Anregungslicht wirkungslos hindurchtreten. Bei stark absorbierenden Wirtsgittern wird das einfallende Licht fast vollständig absorbiert und im Falle hohen Quantenwirkungsgrades fast vollständig in Lumineszenzlicht umgewandelt. Luminophore mit stark absorbierendem Wirtsgitter bieten sich damit außer für Druckverfahren mit geringem Farbauftrag, z. B. dem Offset-Druck, auch für die Absicherung von Wertpapieren durch Aufdampfen und Sputtern an.

Bevorzugt werden bei den erfindungsgemäßen Wertpapieren lumineszierende Substanzen eingesetzt, die lösungsmittelecht sind und allen bezüglich Banknotenfarben vorgeschriebenen Beständigkeitsprüfungen entsprechen. Bei weniger hohen Ansprüchen an die Beständigkeit können aber natürlich auch andere Stoffe, die nicht alle diese bei der Banknotenherstellung üblichen Anforderungen erfüllen, verwendet werden.

Wie bereits erwähnt, ist das Anregungsspektrum der bei den erfindungsgemäßen Wertpapieren eingesetzten Luminophore optimal an die spektrale Strahlungsverteilung von Lichtquellen mit gutem Wirkungsgrad angepaßt, die kompakt aufgebaut und unkompliziert betrieben werden können, wie beispielsweise Halogenlampen und Xenonblitzlampen. Durch den breiten Absorptionsbereich der Luminophore wird die Strahlungsintensität dieser Lichtquellen maximal genutzt.

Die Anregung erfolgt bei den Luminophoren über das absorbierende Wirtsgitter. Die Energie wird auf das Seltenerdmetallion übertragen. Die Emission erfolgt bei den entsprechenden Emissionslinien der Seltenerdmetallionen.

Das Wirtsgitter soll im wesentlichen im gesamten sichtbaren Bereich und gegebenenfalls zusätzlich im nahen IR-Bereich absorbieren. Es ist nicht erforderlich, daß das Wirtsgitter im gesamten sichtbaren Bereich vollständig absorbiert. Es genügt vielmehr, daß die Absorption in jenen Bereichen erfolgt, wo eine sichtbare oder gegebenenfalls im nahen IR gelegene Emission auftreten kann. Auch eine verringerte Absorption des Wirtsgitters in bestimmten Spektralbereichen ist ausreichend, solange sichergestellt ist, daß durch die Absorption des Wirtsgitters mögliche Emissionen im Sichtbaren vermieden werden. Die gewünschten Eigenschaften der Luminophore liegen jedenfalls dann vor, wenn im Sichtbaren und möglichst auch im nahen IR-Bereich keine Emissionen auftreten und damit die Absicherung « unsichtbar » ist bzw. mit handelsüblichen Geräten, wie Bildwandlern, nicht beobachtet werden kann.

Unter « nahem IR » wird hier definitionsgemäß der Spektralbereich vom langwelligen sichtbaren Licht bis 1,1 µm verstanden. Dieser Bereich ist durch handelsübliche Bildwandler zugänglich.

Die aktiven Dotierungen sind Seltenerdmetalle, insbesondere Elemente mit den Ordnungszahlen 58 bis 71, die Emissionslinien im IR-Bereich haben. Bevorzugte Dotierungen sind einzelne oder mehrere der Stoffe Erbium, Holmium, Thulium, Dysprosium.

Vorzugsweise weisen die Luminophore eine Perovskit- oder eine Granatstruktur auf.

Unter Perovskiten werden hier Verbindungen der allgemeinen Formel

$$AXO_3$$

verstanden, wobei

A ein Seltenerdmetall und/oder Wismut und

X ein oder mehrere absorbierende Übergangsmetalle, vorzugsweise Kobalt, Nickel, Mangan oder Eisen bedeuten.

Wie bereits erwähnt, kann das Wirtsgitter ein Mischgitter aus einem absorbierenden und einem nichtabsorbierenden Gitter gleicher Struktur sein, d. h. das absorbierende Übergangsmetall X kann teilweise durch andere Elemente ersetzt sein. Insbesondere kommen in Frage dreiwertige Elemente, wie Aluminium, Gallium, Indium und Scandium sowie vierwertige zusammen mit zweiwertigen Elementen, wie Silizium oder Germanium mit Calcium, Magnesium und/oder Zink.

Als Granate werden hier insbesondere Verbindungen der nachstehend aufgeführten allgemeinen Formeln F1 bis F4 bezeichnet.

F1 : $A_3X_{5-2x}M_xM'_xO_{12}$

F2 : $A_{3-x}B_xX_{5-x}M_xO_{12}$

F3 : $A_3Fe_{5-x}M_xO_{12}$

F4 : $A_{3-2x}B_{2x}X_{5-x}V_xO_{12}$

Dabei bedeutet

A in allen Fällen : ein oder mehrere Seltenerdmetalle mit Ausnahme von Neodym, Praseodym und Lanthan. Letztgenannte Elemente können nur als Gemischbestandteile vorhanden sein. Als Gemischbestandteil kommt auch Wismut in Frage.

X in allen Fällen : ein Element aus der Gruppe Eisen, Aluminium, Gallium und Indium.

M' : ein Element aus der Gruppe Silizium, Germanium, Zinn und Zirkonium.

M bei F1 : ein Element aus der Gruppe Eisen, Kobalt, Nickel, Mangan und Zink.

M bei F2 : ein Element aus der Gruppe Silizium, Germanium, Zinn, Tellur, Zirkonium und Titan.

M bei F3 : ein Element aus der Gruppe Aluminium, Gallium, Indium und Chrom.

B : ein Element aus der Kruppe Magnesium, Kalzium, Strontium, Barium, Mangan, Zink und Kadmium.

Wie die Formeln F1, F2 und F4 ausweisen, ist die Bildung von « Mischgranaten » nicht nur auf den

gegenseitigen Ersatz von Elementen der Oxidationsstufe 3 beschränkt. Bei F1 und F2 werden sowohl 2 wertige als auch 4 wertige Elemente zusammen in das Gitter eingebaut, wobei durch die angegebene Stöchiometrie der notwendige Ladungsausgleich erzielt wird ; bei F4 gilt gleiches für den Einbau von 2 wertigen und 5 wertigen Elementen ; hingegen beschreibt F3 den Austausch von Eisen durch 3 wertige Elemente für die kein Ladungsausgleich erfolgen muß.

Der Index x kann Werte zwischen 0 und maximal 5 annehmen, wobei dieser Wert von der Stöchiometrie begrenzt wird und sichergestellt sein muß, daß ein absorbierender Bestandteil vorliegt. Bevorzugte Beispiele von « Mischgranaten » zu den Fällen F1 bis F4 sind

zu F1 : $Y_3Fe_4Ni_{0,5}Ge_{0,5}O_{12}$
zu F2 : $Y_2CaFe_4SiO_{12}$
zu F3 : $Y_3Fe_3Al_2O_{12}$
zu F4 : $YCa_2Fe_4VO_{12}$

Es versteht sich, daß diese Gitter zum Erzielen von Lumineszenz noch mit den Ionen der Seltenerdmetalle dotiert werden müssen.

Eine weitere geeignete Gruppe von Verbindungen sind mit Seltenerdmetallen dotierte Ferrite, der allgemeinen Formel

$$M_{1-x}^{2+}M'^{3+}_{x}Fe_x^{2+}Fe_{2-x}^{3+}O_4,$$

wobei M ein oder mehrere zweiwertige Metalle aus der Gruppe Indium, Cadmium, Kobalt, Mangan, Eisen, Nickel, Kupfer, Magnesium und M' für eine oder mehrere dreiwertige Lanthanide (Ordnungszahl 58-71) wie Ytterbium, Erbium, Thulium, Dysprosium, Holmium, Gadolinium oder Samarium steht. In diesem Fall ist zur Ladungskompensation das dreiwertige Eisen mehr oder weniger durch Eisen der Oxidationsstufe 2 ersetzt, der Index kann Werte zwischen 0 und 1 annehmen.

Geeignete Luminophore für die erfindungsgemäßen Wertpapiere werden nachstehend anhand von Beispielen näher beschrieben.

## Beispiel 1

Herstellung von Erbium-aktiviertem-Ytterbium-Eisen-Indium-Mischgranat $Y_{2,8}Fe_4InO_{12}:Er_{0,2}$

63,22 g Yttriumoxid $Y_2O_3$, 7,65 g Erbiumoxid $Er_2O_3$, 64 g Eisenoxid $Fe_2O_3$, 27,76 g Indiumoxid $In_2O_3$ und 60 g entwässertes Natriumsulfat $Na_2SO_4$ werden innig vermischt, im Aluminiumtiegel 6 Stunden auf 840 °C erhitzt, erneut vermahlen und weitere 14 Stunden auf 1 100 °C erhitzt.

Nach dem Abkühlen wird das Reaktionsprodukt zerkleinert, mit Wasser das Flußmittel herausgewaschen und bei 100 °C an Luft getrocknet. Zur Erzielung einer möglichst hohen Kornfeinheit wird das Pulver anschließend in einer Rührwerkskugelmühle vermahlen.

Man erhält ein hellgrünes Pulver mit einer mittleren Korngröße von kleiner als 1 µm.

Bei Anregung mit sichtbarem Licht zeigte dieser Luminophor, der ein aus Fig. 1 ersichtliches Anregungsspektrum aufweist keinerlei Lumineszenz im sichtbaren Bereich, jedoch wie aus Fig. 2 ersichtlich eine besonders starke Lumineszenzemission mit charakteristischer Struktur bei etwa 1,5 µm im IR-Bereich wo das Wirtsgitter optisch transparent ist. Auch bei Anregung im UV- und IR- Bereich konnte keine Lumineszenz im sichtbaren Bereich beobachtet werden.

Demgegenüber zeigen übliche mit Erbium dotierte Luminophore mit transparentem Wirtsgitter eine grüne Lumineszenz bei 0,52 bis 0,55 µm. Bei den erfindungsgemäß verwendeten Luminophoren tritt diese grüne Lumineszenz wegen der im sichtbaren Bereich absorbierenden Wirtsgitter nicht auf. Die verbleibende Infrarot-Lumineszenz bei etwa 1,5 µm ist intensiver als bei üblichen transparenten Wirtsgittern. Diese Fluoreszenz liegt auch außerhalb des mit handelsüblichen bildwandlern zugänglichen nahen IR-Bereich.

In Fig. 4 ist die spektrale Strahlungsverteilung einer Xenon-Blitzlampe und in Fig. 5 die spektrale Strahlungsverteilung einer Halogenglühlampe gezeigt. Das Anregungsspektrum (Fig. 1) läßt erkennen, daß dieses den genannten starken Lichtquellen optimal angepaßt ist.

## Beispiel 2

### Herstellung von $Y_{0,8}MnO_3 : Er_{0,2}$

18,06 g Yttriumoxid $Y_2O_3$, 7,65 g Erbiumoxid $Er_2O_3$ und 17,39 g Braunstein $MnO_2$ werden intensiv miteinander in einer Achatmühle gemischt, im Platintiegel abgefüllt und 96 Stunden lang auf 900 °C erhitzt. Man erhält ein schwarzes Pulver, das bei Anregung im Sichtbaren und nahen Infrarot eine Lumineszenz bei 1,5 µm zeigt, aber keinerlei Emission im sichtbaren Bereich.

Das Remissionsspektrum dieses Luminophors ist in Fig. 3 gezeigt. Daraus ist ersichtlich, daß eine starke Absorption im sichtbaren Bereich bis etwa 1 000 nm vorliegt und sich danach im IR-Bereich ein optisches Fenster anschließt.

Beispiel 3'

Herstellung von $Y_{0,8}CoO_3 : Er_{0,2}$

18,06 g Yttriumoxid $Y_2O_3$, 7,65 g Erbiumoxid $Er_2O_3$ und 16 g Kobaltoxid $Co_3O_4$ werden wie unter Beispiel 2 behandelt. Man erhält ein grau-schwarzes Pulver, das bei Anregung im Sichtbaren und nahen Infrarot eine Lumineszenz bei 1,5 µm zeigt, aber keinerlei Emission im sichtbaren Bereich.

Beispiel 4

Herstellung von $Y_{0,8}CoO_3 : Ho_{0,2}$

Analog Beispiel 3; das Erbiumoxid wird durch 7,56 g Holmiumoxid $Ho_2O_3$ ersetzt.

Man erhält ein grau-schwarzes Pulver, das bei Anregung im Sichtbaren und nahen Infrarot eine Lumineszenz bei 2 µm zeigt, aber keinerlei Emission im sichtbaren Bereich.

Beispiel 5

Herstellung von $ErFeO_3$

19,17 g Erbiumoxid $Er_2O_3$, 7,99 g Eisenoxid $Fe_2O_3$ und 9 g entwässertes Natriumsulfat $Na_2SO_4$ werden sorgfältig gemischt und in einem Aluminiumoxidtiegel 14 Stunden bei 1 100 °C geglüht. Nach dem Abkühlen wird das Natriumsulfat mit Wasser herausgewaschen und der Rückstand bei 100 °C an Luft getrocknet. Man erhält ein ocker-farbenes Pigment, das bei Anregung im Sichtbaren und nahen Infrarot eine Lumineszenz bei 1,5 µm zeigt, aber keinerlei Emission im sichtbaren Bereich.

Beispiel 6

Herstellung von $Er_{0,8}FeO_3 : Ho_{0,2}$

30,6 g Erbiumoxid $Er_2O_3$, 7,6 g Holmiumoxid $Ho_2O_3$, 16 g Eisenoxid $Fe_2O_3$ und 31 g entwässertes Natriumsulfat $Na_2SO_4$ werden wie unter Beispiel 4 beschrieben behandelt. Man erhält ein ocker-farbenes Pigment, das bei Anregung im Sichtbaren und nahen Infrarot eine Lumineszenz bei 1,5 µm und 2 µm zeigt, aber keinerlei Emission im sichtbaren Bereich.

Beispiel 7

Herstellung von $Yb_{0,8}FeO_3 : Ho_{0,2}$

31,5 g Ytterbiumoxid $Yb_2O_3$, 7,6 g Holmiumoxid $Ho_2O_3$, 16 g Eisenoxid $Fe_2O_3$ und 28 g Natriumsulfat $Na_2SO_4$ werden wie unter Beispiel 5 beschrieben behandelt, jedoch 60 Stunden bei 1 100 °C geglüht.

Man erhält ein dunkelbraunes Pulver, das bei Anregung im Sichtbaren und nahen Infrarot eine Lumineszenz bei 2 µm zeigt, aber keinerlei Emission im sichtbaren Bereich.

Beispiel 8

Herstellung von $Y_{0,8}NiO_3 : Er_{0,2}$

18,06 g Yttriumoxid $Y_2O_3$, 7,65 g Erbiumoxid $Er_2O_3$ und 14,95 g Nickeloxid NiO werden sorgfältig gemischt, in Platinschiffchen abgefüllt und in einem Quarzrohr unter reinem Sauerstoff 48 Stunden auf 1 150 °C erhitzt. Man erhält ein hellgrünes Pulver, das bei Anregung im Sichtbaren und nahen Infrarot eine Lumineszenz bei 1,5 µm zeigt, aber keinerlei Emission im sichtbaren Bereich.

Beispiel 9

Herstellung von $Gd_{2,8}Fe_5O_{12} : Tm_{0,2}$

101,5 g Gadoliniumoxid $Gd_2O_3$, 7,72 g Thuliumoxid $Tm_2O_3$, 79,9 g Eisenoxid $Fe_2O_3$ und 65 g Natriumsulfat $Na_2SO_4$ werden wie in Beispiel 8 beschrieben aufgearbeitet. Man erhält ein grünes Pulver, das bei Anregung im Sichtbaren und nahen Infrarot eine Lumineszenz bei 1,8 µm zeigt, aber keinerlei Emission im sichtbaren Bereich.

Beispiel 10

Herstellung von $Gd_{2,95}Fe_2Ga_3O_{12} : Dy_{0,05}$

106,94 g Gadoliniumoxid $Gd_2O_3$, 1,86 g Dysprosiumoxid $Dy_2O_3$, 31,9 g Eisenoxid $Fe_2O_3$, 56,3 g Galliumoxid $Ga_2O_3$ und 65 g entwässertes Natriumsulfat $Na_2SO_4$ werden sorgfältig gemischt, in Aluminiumoxidtiegel abgefüllt und 14 Stunden bei 1 100 °C geglüht. Nach dem Abkühlen wird das Reaktionsprodukt zerkleinert, mit Wasser das Flußmittel herausgewaschen und bei 100 °C an Luft getrocknet. Zur Erzielung einer möglichst hohen Kornfeinheit wird das Pulver anschließend in einer Rührwerkskugelmühle vermahlen. Man erhält ein hellgrünes Pulver mit einer mittleren Korngröße von ca. 1 µm, das bei Anregung im Sichtbaren und nahen Infrarot eine Lumineszenz bei 2,7 µm zeigt, aber keinerlei Emission im sichtbaren Bereich.

Wie beispweise aus den zum 1. Beispiel gehörigen Anregungs- und Emissionsspektrums ersichtlich, ist für alle genannten erfindungsgemäßen Absicherungsstoffe das breite Anregungsspektrum im Sichtbaren, welches sich zum Teil bis ins nahe UV und nahe IR erstreckt, charakteristisch. In dem Anregungsbereich werden die den Dotierungen eigenen Emissionsbereiche unterdrückt. Die in den Beispielen genannten dreiwertigen Seltenerdmetallionen haben in üblichen (nicht in diesem Bereich absorbierenden) Wirtsgittern bei UV-Anregung folgende Emissionsfarben: Dysprosium ($Dy^{3+}$), gelb, Thulium ($Tm^{3+}$) blau, Holmium ($Ho^{3+}$) orange-rot, Erbium ($Er^{3+}$) grün. In den erfindungsgemäßen Pigmenten treten diese Emissionen nicht auf. Die Beispiele wurden so gewählt, daß nicht nur im sichtbaren Bereich, sondern auch im nahem IR-Bereich, in dem Bildwandler arbeiten, keine Emissionen auftreten.

Die Wertpapiere gemäß der Erfindung können mit den Luminophoren in vielfältiger Weise ausgestattet werden. Die Luminophore können in die Druckfarben, in das Papier oder in einen Sicherheitsfaden eingebracht werden. Das Einbringen in das Papier selbst ist deshalb möglich, weil das Papier in weiten Bereichen des IR keine Absorption zeigt. Von besonderer Bedeutung ist, daß die Luminophore wegen ihrer Kornfeinheit und hohen Effektivität auch beim Guillochendruck eingesetzt werden können.

Nachstehend wird die Herstellung von Offset-Druckfarben mit den erfindungsgemäß eingesetzten Luminophoren beispielhaft beschrieben.

100 g eines ölmodifizierten Urethanalkydharzes, 10 g Zirkonoctoat, 60 g Scheuerpaste, 160 g gebleichtes Leinöl, 250 g phenolmodifiziertes Kolophoniumharz und 210 g hochsiedendes aromatenfreies Mineralöl wurden auf einem Dreiwalzenstuhl innig vermischt. In diesem Firnis wurden 100 g des Luminophors gemäß Beispiel 1 und 100 g eines Farbpigments zur Erzielung eines bestimmten Farbtons, z. B. Permanentgelb H10G, Hansarot 3B, Hostapermgrün 8G oder Hostapermblau AR, zugegeben (alles eingetragene Warenzeichen der Fa. Hoechst). Es wurde jeweils eine dem Farbpigment entsprechende intensiv gefärbte Druckfarbe erhalten.

Zur Erzielung hellerer Farbtöne wurde der Anteil des Farbpigments verringert und anstelle des Luminophors gemäß Beispiel 1 jener des Beispiels 8 verwendet.

Firnis, Farbpigment und Luminophor wurden auf dem Dreiwalzenstuhl innig vermischt. Die erhaltenen Druckfarben zeigten sich für den Banknoten-Guillochendruck geeignet, ohne daß sich Linienüberschneidungen und Schlingen zusetzten.

Ein geeignetes Prüfgerät zur Echtheitsbestimmung der Luminophore ist aus Fig. 6 ersichtlich. Dabei wird eine zu untersuchende Banknote 1 mittels einer nicht dargestellten Transportvorrichtung auf einem Tisch 2 über ein Fenster 3 gebracht. Aus dem Fenster 3 tritt gebündeltes Anregungslicht, welches von den Beleuchtungseinheiten 6, 7 und 8 herrührt. Die Beleuchtungseinheiten bestehen aus Lampen 9, 10 und 11, Linsen 14, 13 und 12, welche das von den jeweils betätigten Lampen 9, 10 oder 11 ausgehende Licht in einem parallelen Strahlengang umwandeln und Interferenzfilter 16, 17 und 18, welche vom Licht der Lampen 9, 10 und 11 jeweils nur den gewünschten Spektralbereich zum Prüfbereich der Banknote hindurchlassen. Die spektrale Emission der Lampen 9, 10 und 11 muß dementsprechend derart beschaffen sein, daß der durch die jeweiligen Interferenzfilter 16, 17 und 18 bestimmte Spektralbereich möglichst gleichmäßig mit Lichtstrahlung abgedeckt wird.

Das von den Beleuchtungseinheiten 6, 7 und 8 durch die Interferenzfilter 16, 17 und 18 hindurchtretende Licht wird über dichroitische Spiegel 19 und 20 zur Sammellinse 21 geführt und durch diese im Prüfbereich 15 der Banknote 1 gebündelt. Zwischenwände 28 sorgen dafür, daß ausschließlich das durch die Interferenzfilter gefilterte Licht zum Prüfbereich 15 der Banknote gelangt und Streulicht unterdrückt wird.

Mittels des von der Sammellinse 21 im Prüfbereich 15 gebündelten Anregungslichtes werden die im Prüfbereich befindlichen Lumineszenzstoffe zur Emission angeregt, wenn dies aufgrund der Lumineszenzeigenschaften der Stoffe möglich ist.

Die von den Lumineszenzstoffen emittierte Strahlung wird über eine weitere Sammellinse 24 in eine ebenfalls abgeschlossene Kammer 5 projiziert, in der mehrere Lichtempfangseinheiten 25, 26 und 27 angeordnet sind. Ähnlich dem Aufbau der Beleuchtungseinheiten 6, 7 und 8 sind auch die Lichtempfangseinheiten durch Zwischenwände 28 voneinander getrennt. Mittels dichroitischer Spiegel 30 und 31 wird die vom Prüfbereich 15 kommende Strahlung derart aufgeteilt, daß auf jedem der Fotodetektoren 32, 33 und 34 mit Hilfe von Sammellinsen 37, 36 und 35 ein Teil der emittierten Strahlung gebündelt werden kann. Mittels der Interferenzfilter 40, 39 und 38 wird sichergestellt, daß von den Fotodetektoren lediglich Strahlung genau definierter Wellenlängenbereiche erfaßt wird.

Die dargestellte Vorrichtung erlaubt es, einen im Prüfbereich 15 befindlichen Luminophor wechselweise getaktet mit verschiedenen Anregungsstrahlungen aus genau definierten Wellenlängenbereichen zu bestrahlen. Mit Hilfe der in der Kammer 5 angeordneten Lichtempfangseinheiten kann außerdem die von dem Luminophor emittierte Strahlung ebenfalls in exakt definierte unterschiedliche Wellenlängenbereiche unterteilt empfangen und gemessen werden.

Taktet man mittels einer nicht dargestellten Steuereinheit die einzelnen Beleuchtungseinheiten der Reihe nach durch und erfaßt man die vom Prüfbereich 15 emittierte Strahlung taktsynchron mittels der Lichtempfangseinheiten, so kann ein in vorgegebenen Bereichen beliebiges Emissionspektrum anhand von bis zu 9 Meßwerten mit sehr hoher Zuverlässigkeit vermessen und identifiziert werden. Die 9 Meßwerte entsprechen einer 3 × 3 Matrix, welche entsteht, wenn man zu jeder der drei Anregungen die Emission in den drei spektral begrenzten Meßbereichen feststellt.

Neben dem bereits genannten Vorteil, daß in der beschriebenen Vorrichtung keine beweglichen Teile Verwendung finden, durch die die Funktionsfähigkeit beeinträchtigt bzw. die Störanfälligkeit erhöht werden könnte, erhält man durch die ortsfeste Anordnung aller Bauteile den weiteren Vorteil der einfachen und betriebssicheren Anordnung und Justierung aller Bauteile. Des weiteren ist durch die Prüfung einer « spektralen Matrix » eine besonders einfache und besonders sichere Identifizierung von Luminophoren gegeben. Da ein Lumineszenzstoff schon mit drei oder vier der möglichen Prüfungen relativ eindeutig zu identifizieren ist, erhält man mit der in Fig. 6 gezeigten Anordnung eine Prüfvorrichtung die allein über steuerungstechnische Maßnahmen (Software) die optimale Anpassung an verschiedenste Lumineszenzstoffe ermöglicht. Bei der individuellen Anpassung der Einzelprüfungen an einen zu identifizierenden Luminophor wird dabei vorteilhafterweise nicht nur die Prüfung vom spektralen Emissionsmaxima vorgenommen, sondern auch das Vorliegen von charakteristischen Minima, bei schmalbandigen Lumineszenzstoffen gegebenenfalls direkt neben den Maxima, erfaßt.

Wegen der großen Zahl der Filter in den verschiedenen Kanälen ist aus der Anordnung und dem Vorhandensein der optischen Bauelemente kein direkter Rückschluß auf die zu prüfenden Merkmalsstoffe möglich. Dies stellt einen zusätzlichen Schutz vor Ausspähung der Merkmalseigenschaften dar. Durch einfache Abänderung der individuellen auf einen Lumineszenzstoff zugeschnittenen und im jeweiligen Prüfprogramm gespeicherten Prüfmatrix ist außerdem die Umstellung auf einen anderen Lumineszenzstoff möglich. Mechanische Eingriffe in die Prüfoptik sind hierfür nicht notwendig.

## Ansprüche

1. Wertpapier mit Echtheitsmerkmalen in Form von lumineszierenden Substanzen auf der Basis von mit Seltenerdmetallen dotierten Wirtsgittern, dadurch gekennzeichnet, daß das Wirtsgitter im wesentlichen im gesamten sichtbaren Bereich und gegebenenfalls zusätzlich im nahen IR absorbiert und in wesentlichen Teilen des sichtbaren oder des nahen IR-Bereichs anregbar ist und im IR einen optisch transparenten Bereich hat, in dem die Substanz ausschließlich emittiert.

2. Wertpapier nach Anspruch 1, dadurch gekennzeichnet, daß das absorbierende Wirtsgitter an die Emissionslinien der verwendeten Dotierung derart angepaßt ist, daß es zumindest in den Bereichen der sichtbaren und gegebenenfalls im nahen IR befindlichen Emissionslinien derart stark absorbiert, daß jede im sichtbaren Bereich und gegebenenfalls im nahen IR-Bereich auftretende Emission unterdrückt wird.

3. Wertpapier nach Anspruch 1 oder 2, dadurch gekennzeichnet, daß das Wirtsgitter ein Mischgitter aus einem im sichtbaren und gegebenenfalls im nahen IR-Bereich absorbierenden und einem nichtabsorbierenden Gitter gleicher Struktur ist.

4. Wertpapier nach einem oder mehreren der vorhergehenden Ansprüche, dadurch gekennzeichnet, daß das Wirtsgitter als aktive Dotierung Ionen der Seltenerdmetalle der Ordnungszahl 58 bis 71 enthält.

5. Wertpapier nach einem oder mehreren der vorhergehenden Ansprüche, dadurch gekennzeichnet, daß das Absorptionsvermögen durch den Anteil von absorbierenden zu nichtabsorbierenden Wirtsgitterbestandteilen eingestellt ist.

6. Wertpapier nach Anspruch 1, dadurch gekennzeichnet, daß der optisch transparente Bereich zwischen 0,8 und 10 µm liegt.

7. Wertpapier nach Anspruch 6, dadurch gekennzeichnet, daß der optisch transparente Bereich zwischen 1,1 und 10 µm liegt.

8. Wertpapier nach einem der Ansprüche 1 bis 7, dadurch gekennzeichnet, daß das Wirtsgitter als absorbierende Elemente im sichtbaren und gegebenenfalls nahen IR absorbierende Übergangsmetallionen enthält.

9. Wertpapier nach Anspruch 8, dadurch gekennzeichnet, daß das Wirtsgitter als absorbierende Elemente Metalle der Nebengruppen VI, VII oder VIII enthält.

10. Wertpapier nach Anspruch 9, dadurch gekennzeichnet, daß das Wirtsgitter als absorbierende Elemente Kobalt, Nickel, Mangan oder Eisen enthält.

11. Wertpapier nach einem oder mehreren der Ansprüche 8 bis 10, dadurch gekennzeichnet, daß das Wirtsgitter eine Granatstruktur, eine Perovskitstruktur oder Ferritstruktur aufweist.

12. Wertpapier nach Anspruch 11, dadurch gekennzeichnet, daß sich die Granatstruktur durch die allgemeine Formel

$$A_3X_{5-2x}M_xM'_xO_{12}$$

beschreiben läßt, wobei

A die Seltenerdmetalle mit Ausnahme von Neodym, Praseodym und Lanthan sowie deren Gemische untereinander oder mit Lanthan, Praseodym, Neodym und Wismut,

X ein Metall aus der Gruppe Eisen, Aluminium, Gallium und Indium,

M ein Metall aus der Gruppe Eisen, Kobalt, Nickel, Mangan und Zink,

M' ein Element aus der Gruppe Silizium, Germanium, Zinn und Zirkonium

bedeutet und der Index x die Bedingung $x > 0 \leq 2{,}5$ erfüllt.

13. Wertpapier nach Anspruch 12, dadurch gekennzeichnet, daß das Wirtsgitter

$$Y_3Fe_4Ni_{0,5}Ge_{0,5}O_{12}$$

ist.

14. Wertpapier nach Anspruch 11, dadurch gekennzeichnet, daß sich die Granatstruktur durch die allgemeine Formel

$$A_{3-x}B_xX_{5-x}M_xO_{12}$$

beschreiben läßt, wobei

A die Seltenerdmetalle mit Ausnahme von Neodym, Praseodym und Lanthan sowie deren Gemische untereinander oder mit Neodym, Praseodym, Lanthan und Wismut,

B ein Element aus der Gruppe Magnesium, Kalzium, Strontium, Barium, Mangan, Zink und Kadmium,

X ein Metall aus der Gruppe Eisen, Aluminium, Gallium und Indium,

M ein Element aus der Gruppe Silizium, Germanium, Zinn, Tellur, Zirkonium und Titan,

bedeutet und der Index x die Bedingung $x > 0{,}3 \leq 3$ erfüllt.

15. Wertpapier nach Anspruch 14, dadurch gekennzeichnet, daß das Wirtsgitter

$$Y_2CaFe_4SiO_{12}$$

ist.

16. Wertpapier nach Anspruch 11, dadurch gekennzeichnet, daß sich die Granatstruktur durch die allgemeine Formel

$$A_3Fe_{5-x}M_xO_{12}$$

beschreiben läßt, wobei

A die Seltenerdmetalle mit Ausnahme von Neodym, Praseodym oder Lanthan sowie deren Gemische untereinander oder mit Neodym, Praseodym, Lanthan und Wismut,

M ein Metall aus der Gruppe Aluminium, Gallium, Indium und Chrom,

bedeutet und der Index x die Bedingung $0 \leq x < 5$ erfüllt.

17. Wertpapier nach Anspruch 16, dadurch gekennzeichnet, daß das Wirtsgitter

$$Y_3Fe_3Al_2O_{12}$$

ist.

18. Wertpapier nach Anspruch 11, dadurch gekennzeichnet, daß sich die Granatstruktur durch die allgemeine Formel

$$A_{3-2x}B_{2x}X_{5-x}V_xO_{12}$$

beschreiben läßt, wobei

A die Seltenerdmetalle mit Ausnahme von Neodym, Praseodym und Lanthan sowie deren Gemische untereinander oder mit Neodym, Praseodym, Lanthan und Wismut,

B ein Element aus der Gruppe Magnesium, Kalzium, Strontium und Barium,

X ein Element aus der Gruppe Aluminium, Gallium, Indium und Eisen,

bedeutet und der Index x die Bedingung $0 < x \leq 1{,}5$ erfüllt.

19. Wertpapier nach Anspruch 18, dadurch gekennzeichnet, daß das Wirtsgitter

$$YCa_2Fe_4VO_{12}$$

ist.

20. Wertpapier nach einem oder mehreren der vorangehenden Ansprüche, dadurch gekennzeichnet, daß das Wirtsgitter eine Perovskitstruktur nach der allgemeinen Formel

$$AXO_3$$

aufweist, wobei

A ein Seltenerdmetall und/oder Wismut und

X ein oder mehrere absorbierende Übergangsmetalle vorzugsweise Kobalt, Nickel, Mangan oder Eisen bedeuten.

21. Wertpapier nach einem oder mehreren der vorhergehenden Ansprüche, dadurch gekennzeichnet, daß das Wirtsgitter eine Ferritstruktur nach der allgemeinen Formel

$$M_{1-x}^{2+}M'^{3+}_{x}Fe_{x}^{2+}Fe_{2-x}^{3+}O_4$$

aufweist, wobei

M ein oder mehrere zweiwertige Metalle aus der Gruppe Indium, Kadmium, Kobalt, Mangan, Eisen, Nickel, Kupfer oder Magnesium,

M' für ein oder mehrere dreiwertige Lanthanide (Ordnungszahl 58-71) steht und der Index x Werte zwischen 0 und 1 annehmen kann.

22. Wertpapier nach einem oder mehreren der vorhergehenden Ansprüche, dadurch gekennzeichnet, daß die lumineszierende Substanz mindestens einer der Druckfarben zugemischt ist.

23. Wertpapier nach Anspruch 22, dadurch gekennzeichnet, daß das Absorptionsvermögen in Abhängigkeit von der Helligkeit der verwendeten Druckfarbe derart gewählt ist, daß keine oder nahezu keine Verfälschung der Druckfarben eintritt.

24. Wertpapier nach Anspruch 23, dadurch gekennzeichnet, daß bei Anwendung in sehr hellen Druckfarben die lumineszierende Substanz mit nur geringem Absorptionsvermögen ausgestattet ist.

25. Wertpapier nach Anspruch 23, dadurch gekennzeichnet, daß bei Anwendung in sehr dunklen Druckfarben die lumineszierende Substanz mit relativ hohem Absorptionsvermögen ausgestattet ist.

26. Wertpapier nach einem oder mehreren der vorhergehenden Ansprüche, dadurch gekennzeichnet, daß die lumineszierende Substanz der Papiermasse beigemischt ist.

27. Wertpapier nach Anspruch 22 oder 26, dadurch gekennzeichnet, daß die lumineszierende Substanz zumindest teilweise großflächig auf/in dem Wertpapier vorgesehen ist.

28. Wertpapier nach Anspruch 27, dadurch gekennzeichnet, daß die lumineszierende Substanz in Form von Streifen auf/im Wertpapier vorgesehen ist.

29. Wertpapier nach einem oder mehreren der vorhergehenden Ansprüche, dadurch gekennzeichnet, daß die lumineszierende Substanz als unsichtbare, das Wertpapier zumindest teilweise bedeckende Schicht, vorgesehen ist.

30. Wertpapier nach einem oder mehreren der vorhergehenden Ansprüche, dadurch gekennzeichnet, daß die lumineszierende Substanz durch entsprechend präparierte Melierfasern im Papiervolumen vorliegt.

31. Wertpapier nach einem oder mehreren der vorhergehenden Ansprüche, dadurch gekennzeichnet, daß die lumineszierende Substanz durch einen entsprechend präparierten Sicherheitsfaden im Papiervolumen vorliegt.

32. Prüfverfahren zur Echtheitsprüfung eines Wertpapiers nach einem der Ansprüche 1-31, dadurch gekennzeichnet, daß sowohl das Infrarot-Anregungslicht als auch das emittierte Infrarot Lumineszenzlicht in mehrere Kanäle bestimmter spektraler Bandbreite aufgeteilt wird und daß das Lumineszenzlicht in den einzelnen Emissionskanälen in Abhängigkeit von den in zeitlicher Folge nacheinander zur Anregung herangezogenen spektral begrenzten Anregungskanälen gemessen und daß die so erhaltene Meßwertmatrix als Echtheitskriterium verwendet wird.

33. Prüfverfahren zur Echtheitsprüfung eines Wertpapiers nach Anspruch 32, dadurch gekennzeichnet, daß sowohl das Anregungs- und Emissionsspektrum jeweils in drei nicht überlappende Kanäle bestimmter spektraler Bandbreite aufgeteilt werden.

34. Vorrichtung für Anwendung eines Prüfverfahrens nach Anspruch 33, dadurch gekennzeichnet, daß die Aufteilung des Anregungs- und des Emissionsspektrums in mehrere Kanäle bestimmter spektraler Bandbreite mittels Interferenzfilter erfolgt.

**Claims**

1. A security paper with authenticity features in the form of luminescing substances on the basis of host lattices doped with rare earth metals, characterized in that the host lattice absorbs essentially in the whole visible range and possibly in the near IR as well, and can be excited in substantial portions of the visible or the near IR range, and has an optically transparent range in the IR in which the substance exclusively emits.

2. The security paper as in claim 1, characterized in that the absorbing host lattice is so matched to the emission lines of the dopant used that it strongly absorbs emission lines located at least in the ranges of the visible, and possibly in the near IR, in such a way that each emission arising in the visible range and possibly in the near IR range is suppressed.

3. The security paper as in claim 1 or 2, characterized in that the host lattice is a mixed lattice of a lattice absorbing in the visible and possibly the near IR range, and a non-absorbing lattice of the same structure.

4. The security paper as in one or more of the above claims, characterized in that the host lattice contains, as an active dopant, ions of the rare earth metals with the atomic numbers 58 to 71.

5. The security paper as in one or more of the above claims, characterized in that the absorptive capacity is adjusted by the proportion of absorbing to non-absorbing host lattice components.

6. The security paper as in claim 1, characterized in that the optically transparent range is between 0.8 and 10 μm.

7. The security paper as in claim 6, characterized in that the optically transparent range is between 1.1 and 10 μm.

8. The security paper as in one or more of claims 1 to 7, characterized in that the host lattice contains, as absorbing elements, transition metal ions which absorb in the visible and possibly the near IR range.

9. The security paper as in claim 8, characterized in that the host lattice contains, as absorbing elements, metals of the subgroups VI, VII or VIII.

10. The security paper as in claim 9, characterized in that the host lattice contains, as absorbing elements, cobalt, nickel, manganese or iron.

11. The security paper as in one or more of claims 8 to 10, characterized in that the host lattice has a garnet structure, a perovskite structure or a ferrite structure.

12. The security paper as in claim 11, characterized in that the garnet structure may be described by the general formula

$$A_3X_{5-2x}M_xM'_xO_{12}$$

wherein

A represents the rare earth metals with the exception of neodymium, praseodymium and lanthanum as well as their mixtures with each other or with lanthanum, praseodymium, neodymium and bismuth,

X a metal from the group iron, aluminium, gallium and indium,

M a metal from the group iron, cobalt, nickel, manganese and zinc,

M' an element from the group silicon, germanium, tin and zirconium,

and the index x fulfils the condition $x > 0 \leq 2.5$.

13. The security paper as in claim 12, characterized in that the host lattice is

$$Y_3Fe_4Ni_{0.5}Ge_{0.5}O_{12}.$$

14. The security paper as in claim 11, characterized in that the garnet structure may be described by the general formula

$$A_{3-x}B_xX_{5-x}M_xO_{12}$$

wherein

A represents the rare earth metals with the exception of neodymium, praseodymium and lanthanum as well as their mixtures with each other or with neodymium, praseodymium, lanthanum and bismuth,

B an element from the group magnesium, calcium, strontium, barium, manganese, zinc and cadmium,

X a metal from the group iron, aluminium, gallium and indium,

M an element from the group silicon, germanium, tin, tellurium, zirconium and titanium

and the index x fulfils the condition $x > 0.3 \leq 3$.

15. The security paper as in claim 14, characterized in that the host lattice is

$$Y_2CaFe_4SiO_{12}.$$

16. The security paper as in claim 11, characterized in that the garnet structure may be described by the general formula

$$A_3Fe_{5-x}M_xO_{12}$$

wherein

A represents the rare earth metals with the exception of neodymium, praseodymium or lanthanum as well as their mixtures with each other or with neodymium, praseodymium, lanthanum and bismuth,

M a metal from the group aluminum, gallium, indium and chromium

and the index x fulfils the condition $0 \leq x < 5$.

17. The security paper as in claim 16, characterized in that the host lattice is

$$Y_3Fe_3Al_2O_{12}.$$

18. The security paper as in claim 11, characterized in that the garnet structure may be described by the general formula

$$A_{3-2x}B_{2x}X_{5-x}V_xO_{12}$$

wherein

A represents the rare earth metals with the exception of neodymium, praseodymium and lanthanum as well as their mixtures with each other or with neodymium, praseodymium, lanthanum and bismuth,

B an element from the group magnesium, calcium, strontium and barium,

X an element from the group aluminum, gallium, indium and iron,

and X fulfils the condition $0 < x \leq 1.5$.

19. The security paper as in claim 18, characterized in that the host lattice is

$$Y\,Ca_2Fe_4VO_{12}.$$

20. The security paper as in one or more of the above claims, characterized in that the host lattice has a perovskite structure according to the general formula

$$AXO_3$$

wherein

A represents a rare earth metal and/or bismuth, and

X one or more absorbing transition metals, preferably cobalt, nickel, manganese or iron.

21. The security paper as in one or more of the above claims, characterized in that the host lattice has a ferrite structure according to the general formula

$$M_{1-x}{}^{2+}M'_x{}^{3+}Fe_x{}^{2+}Fe_{2-x}{}^{3+}O_4$$

wherein

M represents one or more bivalent metals from the group indium, cadmium, cobalt, manganese, iron, nickel, copper or magnesium,

M' one or more trivalent lanthanides (atomic numbers 58-71),

and the index x may assume values between 0 and 1.

22. The security paper as in one or more of the above claims, characterized in that the luminescing substance is mixed into at least one of the printing inks.

23. The security paper as in claim 22, characterized in that the absorptive capacity is selected in correlation with the lightness of the printing ink used, in such a way that there is no, or virtually no, adulteration of the printing ink.

24. The security paper as in claim 23, characterized in that the luminescing substance, when applied in very light printing inks, is provided with only a small absorptive capacity.

25. The security paper as in claim 23, characterized in that the luminescing substance, when applied in very dark printing inks, is provided with a relatively high absorptive capacity.

26. The security paper as in one or more of the above claims, characterized in that the luminescing substance is mixed into the paper pulp.

27. The security paper as in claim 22 or 26, characterized in that the luminescing substance is provided at least partly in large areas in/on the security paper.

28. The security paper as in claim 27, characterized in that the luminescing substance is provided in the form of strips on/in the security paper.

29. The security paper as in one or more of the above claims, characterized in that the luminescing substance is provided as an invisible layer covering the security paper at least in part.

30. The security paper as in one or more of the above claims, characterized in that the luminescing substance is present in the bulk of the paper due to corespondingly prepared mottling fibers.

31. The security paper as in one or more of the above claims, characterized in that the luminescing substance is present in the bulk of the paper due to a correspondingly prepared security thread.

32. A testing method for testing the authencity of a security paper as in any of claims 1-31, characterized in that both the infrared excitation light and the emitted infrared luminescence light are divided up into several channels of definite spectral band width, and in that the luminescence light is measured in the various emission channels in correlation with the spectrally limited excitation channels used for excitation in a successive time sequence, and in that the measuring value matrix so obtained is used as the criterion of authenticity.

33. The testing method for testing the authenticity of a security paper as in claim 32, characterized in that both the excitation spectrum and the emission spectrum are divided up into three non-overlapping channels of definite spectral band width.

34. An apparatus for applying a testing method as in claim 33, characterized in that the division of the excitation and emission spectra into several channels of definite spectral band width takes place by means of interference filters.

**Revendications**

1. Papier valeur avec des caractéristiques d'authenticité sous forme de substances luminescentes sur la base de réseaux hôtes dopés avec des métaux de terres rares, caractérisé en ce que le réseau hôte absorbe sensiblement dans la totalité du domaine visible et le cas échéant additionnellement dans le domaine infrarouge proche et peut être excité dans des parties importantes du domaine visible ou du domaine infrarouge proche et comporte dans l'infrarouge un domaine optiquement transparent dans lequel la substance émet exclusivement.

2. Papier valeur selon la revendication 1, caractérisé en ce que le réseau hôte absorbant est adapté aux raies d'émission de l'élément de dopage utilisé de telle sorte que, au moins dans les zones des raies d'émission se trouvant dans le domaine visible et le cas échéant dans le domaine infrarouge proche, il absorbe fortement de telle sorte que l'on empêche la production de toute émission dans le domaine visible et, le cas échéant, dans le domaine infrarouge proche.

3. Papier valeur selon la revendication 1 ou 2, caractérisé en ce que le réseau hôte est un réseau mixte ayant une structure analogue à un réseau absorbant dans le domaine visible et, le cas échéant, dans le domaine infrarouge proche et un réseau non absorbant.

4. Papier valeur selon une ou plusieurs des revendications précédentes, caractérisé en ce que le réseau hôte contient comme élément de dopage actif des ions de métaux de terres rares de numéro d'ordre 58 à 71.

5. Papier valeur selon une ou plusieurs des revendications précédentes, caractérisé en ce que le pouvoir d'absorption est réglé par le rapport entre les composants absorbants et les composants non absorbants du réseau hôte.

6. Papier valeur selon la revendication 1, caractérisé en ce que le domaine optiquement transparent est compris entre 0,8 et 10 µm.

7. Papier valeur selon la revendication 6, caractérisé en ce que le domaine optiquement transparent est compris entre 1,1 et 10 µm.

8. Papier valeur selon une des revendications 1 à 7, caractérisé en ce que le réseau hôte contient comme éléments absorbants des ions de métaux de transition absorbant dans le domaine visible et le cas échéant dans le domaine infrarouge proche.

9. Papier valeur selon la revendication 8, caractérisé en ce que le réseau hôte contient comme éléments absorbants des métaux des groupes secondaires VI, VII ou VIII.

10. Papier valeur selon la revendication 9, caractérisé en ce que le réseau hôte contient comme éléments absorbants du cobalt, du nickel, du manganèse ou du fer.

11. Papier valeur selon une ou plusieurs des revendications 8 à 10, caractérisé en ce que le réseau hôte à une structure de grenat, une structure de perovskite ou une structure de ferrite.

12. Papier valeur selon la revendication 11, caractérisé en ce que la structure de grenat peut être définie par la formule générale

$$A_3\,X_{5-2x}M_xM'_xO_{12}$$

où :

A représente les métaux de terres rares à l'exception du néodyme, du praséodyme et du lanthane ainsi que leur mélange entre eux ou bien avec du lanthane, du praséodyme, du néodyme et du bismuth ;

X représente un métal du groupe fer, aluminium, gallium et indium ;

M représente un métal du groupe fer, cobalt, nickel, manganèse et zinc ;

M' représente un élément du groupe silicium, germanium, étain et zirconium ; et

l'indice x satisfait à la condition $0 < x \leq 2,5$.

13. Papier valeur selon la revendication 12, caractérisé en ce que le réseau hôte est $Y_3Fe_4$-$Ni_{0,5}Ge_{0,5}O_{12}$.

14. Papier valeur selon la revendication 11, caractérisé en ce que la structure de grenat peut être définie par la formule générale :

$$A_{3-x}B_xX_{5-x}M_xO_{12}$$

où :

A représente les métaux de terres rares à l'exception de néodyme, praséodyme et lanthane ainsi que leur mélange entre eux ou bien avec néodyme, praséodyme, lanthane et bismuth ;

B un élément du groupe magnésium, calcium, strontium, baryum, manganèse, zinc et cadmium ;

X un métal du groupe fer, aluminium, gallium et indium ;

M un élément du groupe silicium, germanium, étain, tellure, zirconium et titane ; et

l'indice x satisfait à la condition $0,3 < x \leq 3$.

15. Papier valeur selon la revendication 14, caractérisé en ce que le réseau hôte est

$$Y_2CaFe_4SiO_{12}$$

16. Papier valeur selon la revendication 11, caractérisé en ce que la structure de grenat peut être définie par la formule générale :

$$A_3Fe_{5-x}M_xO_{12}$$

où :

A représente les métaux de terres rares à l'exception de néodyme, praséodyme et lanthane ainsi que leur mélange entre eux ou bien avec du lanthane, du praséodyme, du néodyme et du bismuth ;

M un métal du groupe aluminium, gallium, indium et chrome ; et l'indice x satisfait à la condition $0 \leq x < 5$.

17. Papier valeur selon la revendication 16, caractérisé en ce que le réseau hôte est

$$Y_3Fe_3Al_2O_{12}$$

18. Papier valeur selon la revendication 11, caractérisé en ce que la structure de grenat peut être définie par la formule générale :

$$A_{3-2x}B_{2x}X_{5-x}V_xO_{12}$$

où :

A représente les métaux de terres rares à l'exception de noédyme, praséodyme et lanthane ainsi que leur mélange entre eux ou bien avec du lanthane, du praséodyme, du néodyme et du bismuth ;

B un élément du groupe magnésium, calcium, strontium et baryum ;

X un élément du groupe aluminium, gallium, indium et fer ; et l'indice x satisfait à la condition $0 < x \leq 1{,}5$.

19. Papier valeur selon la revendication 18, caractérisé en ce que le réseau hôte est

$$Y_3Ca_2Fe_4VO_{12}$$

20. Papier valeur selon une ou plusieurs des revendications précédentes, caractérisé en ce que le réseau hôte présente une structure de perovskite conforme à la formule générale :

$$AXO_3$$

où :

A représente un métal de terres rares et/ou le bismuth ;

X représente un ou plusieurs métaux de transition absorbants, de préférence le cobalt, le nickel, le manganèse ou le fer.

21. Papier valeur selon une ou plusieurs des revendications précédentes, caractérisé en ce que le réseau hôte a une structure de ferrite conforme à la formule générale :

$$M_{1-x}^{2+}M'^{3+}_xFe_x^{2+}Fe_{2-x}^{3+}O_4$$

où :

M représente un ou plusieurs métaux bivalents du groupe indium, cadmium, cobalt, manganèse, fer, nickel, cuivre ou magnésium et M' représente un ou plusieurs lanthanides trivalents (nº d'ordre 58-71) et

l'indice x peut prendre des valeurs comprises 0 et 1.

22. Papier valeur selon une ou plusieurs des revendications précédentes, caractérisé en ce que la substance luminescente est mélangée à au moins une des encres d'impression.

23. Papier valeur selon la revendication 22, caractérisé en ce que le pouvoir d'absorption est choisi en fonction de la clarté de l'encre d'impression utilisée de manière qu'il ne se produise pas ou pratiquement pas de falsification des encres d'impression.

24. Papier valeur selon la revendication 23, caractérisé en ce que, lors d'une utilisation dans des encres d'impression très claires, la substance luminescente est pourvue seulement d'un faible pouvoir d'absorption.

25. Papier valeur selon la revendication 23, caractérisé en ce que, lors d'une utilisation dans des encres d'impression très foncées, la substance luminescente est pourvue d'un pouvoir d'absorption relativement grand.

26. Papier valeur selon une ou plusieurs des revendications précédentes, caractérisé en ce que la substance luminescente est mélangée à la masse de papier.

27. Papier valeur selon la revendication 22 ou 26, caractérisé en ce que la substance luminescente est prévue au moins en partie avec une grande surface sur/dans le papier valeur.

28. Papier valeur selon la revendication 27, caractérisé en ce que la substance luminescente est prévue sous forme de bande dans/sur le papier valeur.

29. Papier valeur selon une ou plusieurs des revendications précédentes, caractérisé en ce que la substance luminescente est prévue sous forme d'une couche invisible, recouvrant au moins partiellement le papier valeur.

30. Papier valeur selon une ou plusieurs des revendications précédentes, caractérisé en ce que la substance luminescente est incorporée à la masse de papier sous forme de fibres mélangées préparées en correspondance.

31. Papier valeur selon une ou plusieurs des revendications précédentes, caractérisé en ce que la substance luminescente est incorporée à la masse de papier sous la forme d'un fil de sécurité préparé en correspondance.

32. Procédé de contrôle pour le contrôle d'authenticité d'un papier valeur selon une des revendications 1 à 31, caractérisé en ce qu'aussi bien la lumière d'excitation infrarouge qu'également la lumière luminescente infrarouge émise sont divisées en plusieurs canaux d'une largeur de bande spectrale déterminée et en ce que la lumière luminescente est mesurée dans les différents canaux d'émission en fonction des canaux d'excitation délimités spectralement et intervenant successivement pour l'excitation, et en ce que la matrice de valeurs de mesure ainsi obtenue est utilisée comme critère d'authenticité.

33. Procédé de contrôle pour un contrôle d'authenticité d'un papier valeur selon la revendication 32, caractérisé en ce qu'aussi bien le spectre d'excitation que le spectre d'émission sont chacun divisés en trois canaux ne se recouvrant pas et ayant des largeurs de bande spectrale déterminées.

34. Dispositif pour la mise en œuvre d'un procédé de contrôle selon la revendication 33, caractérisé en ce que la division du spectre d'excitation et du spectre d'émission en plusieurs canaux de largeurs de bande spectrale déterminées est effectuée au moyen de filtres à interférence.

Fig. 1

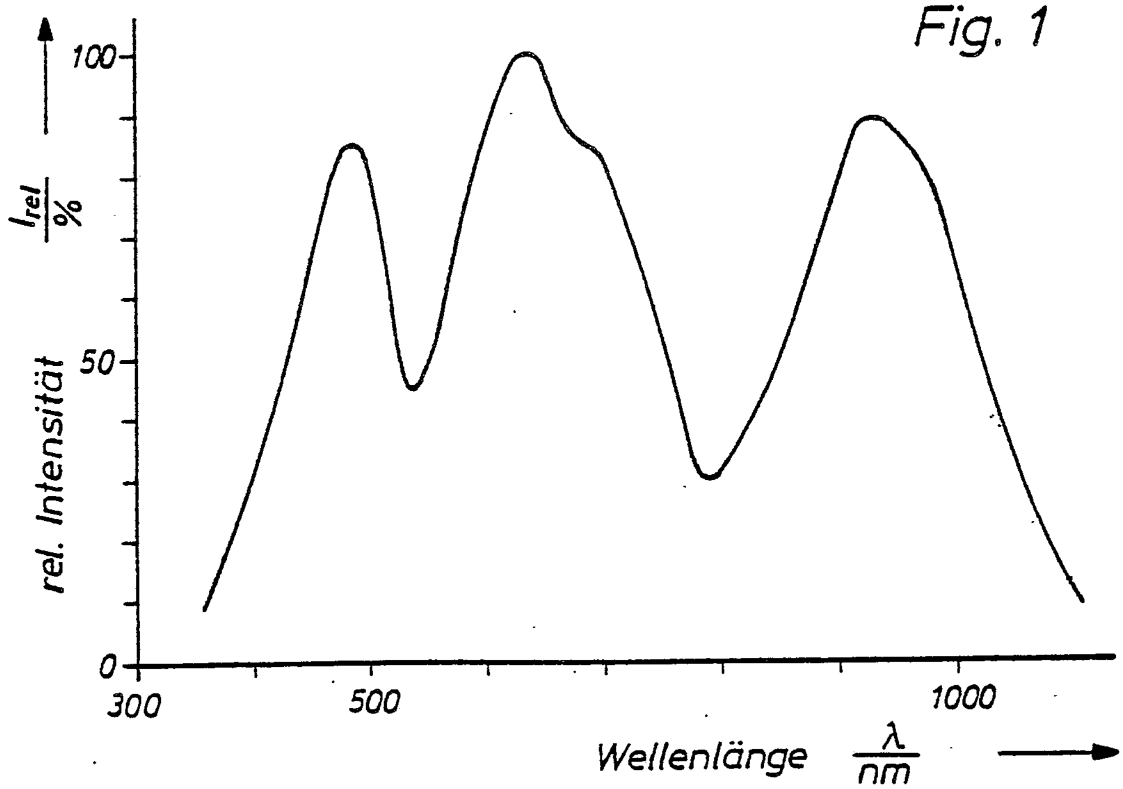
100
50
0
rel. Intensität
$I_{rel}$ / %
300
500
1000
Wellenlänge λ / nm

Fig. 5

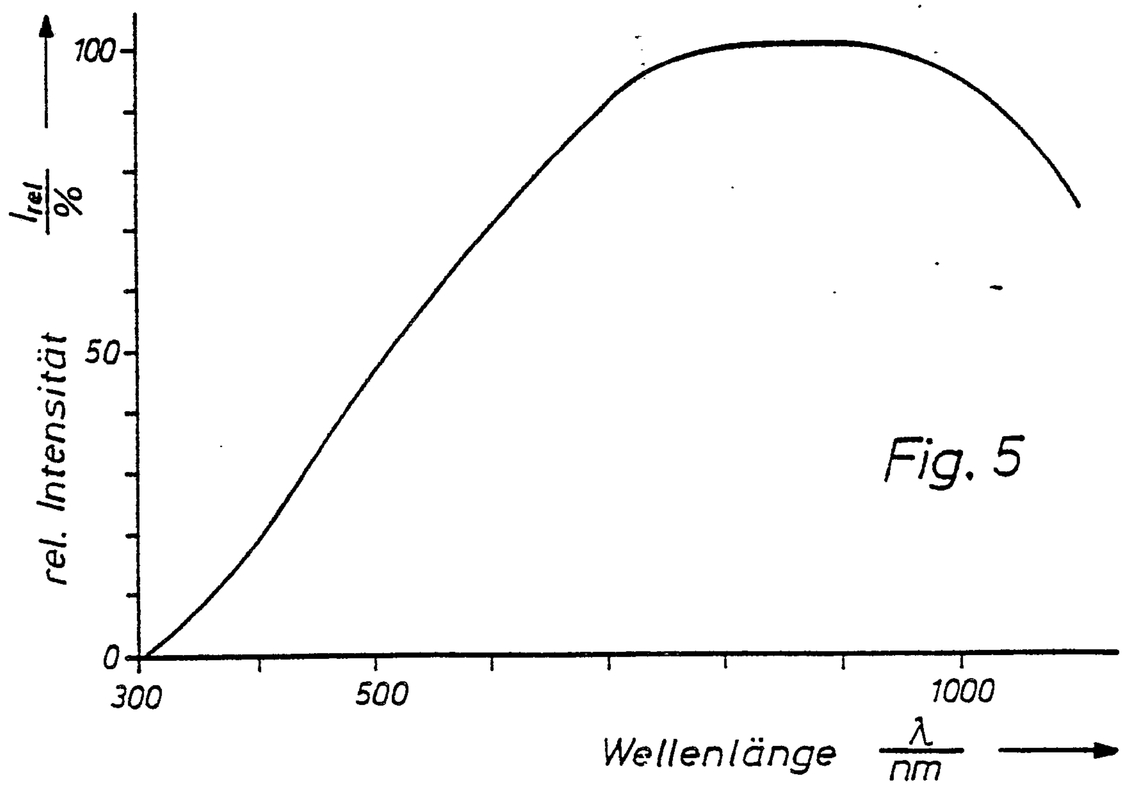
100
50
0
rel. Intensität
$I_{rel}$ / %
300
500
1000
Wellenlänge λ / nm

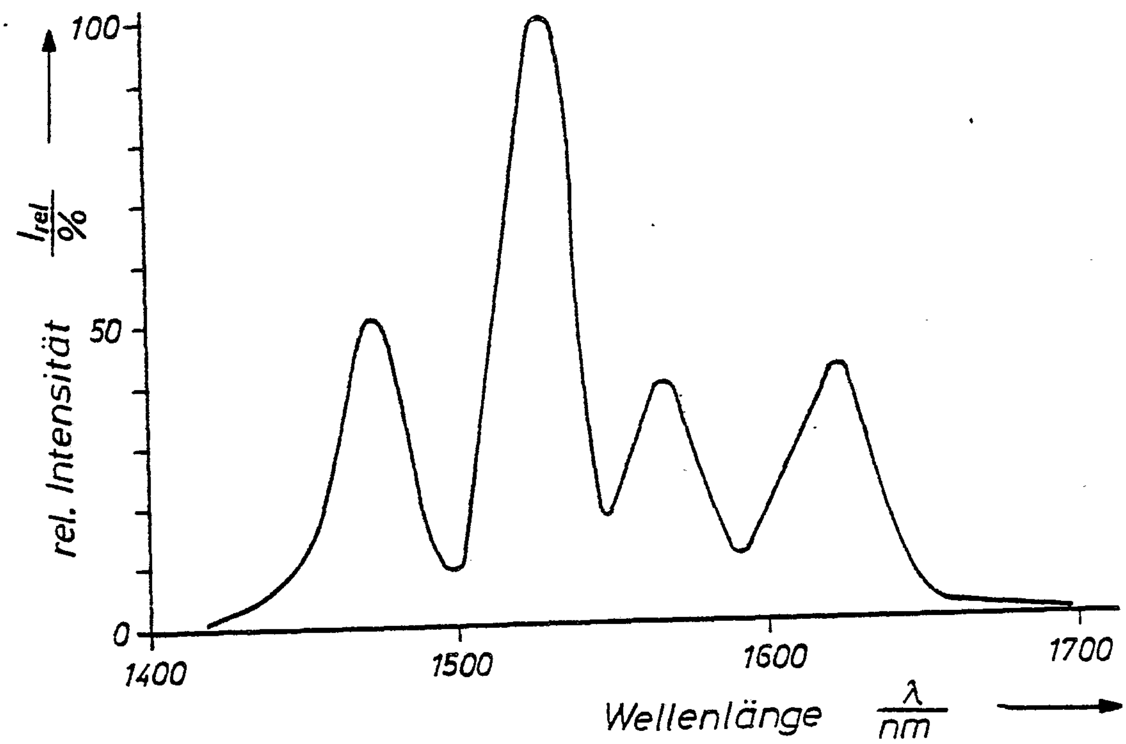
100
50
0
rel. Intensität $\frac{I_{rel}}{\%}$
1400
1500
1600
1700
Wellenlänge $\frac{\lambda}{nm}$

Fig. 2

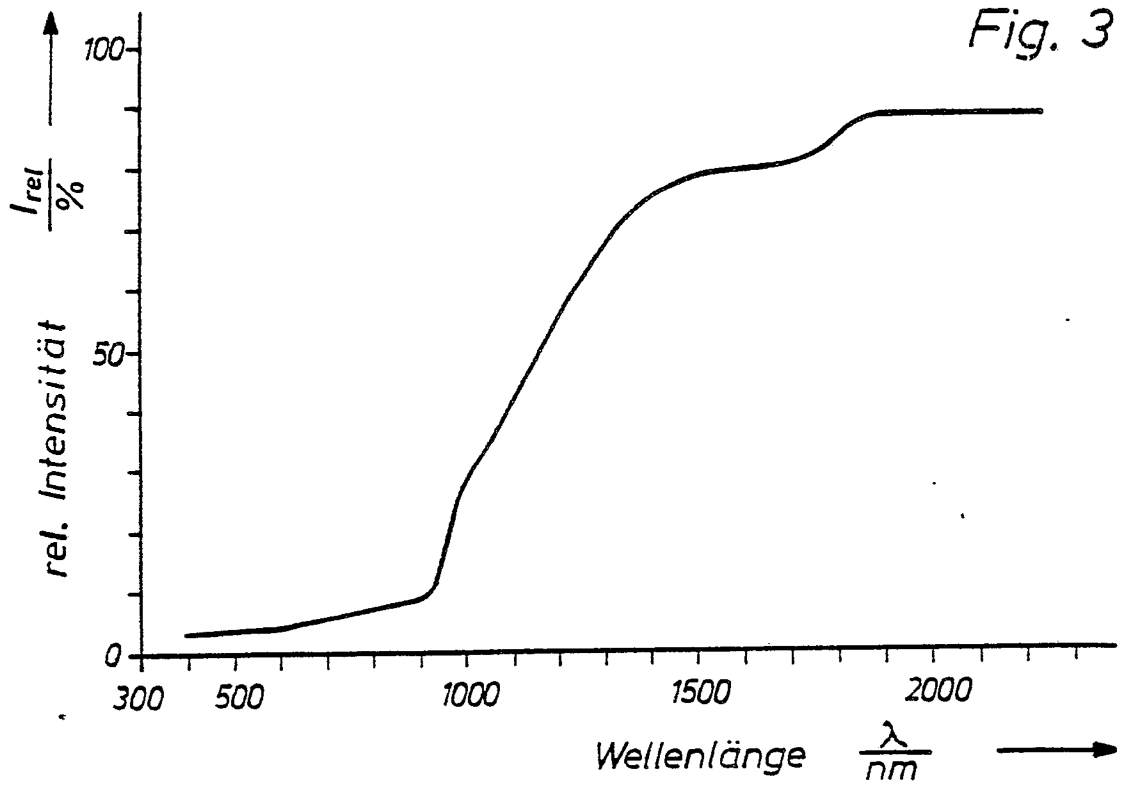
rel. Intensität
$I_{rel}$ / %
100
50
0
300
500
1000
1500
2000
Wellenlänge λ / nm

Fig. 3

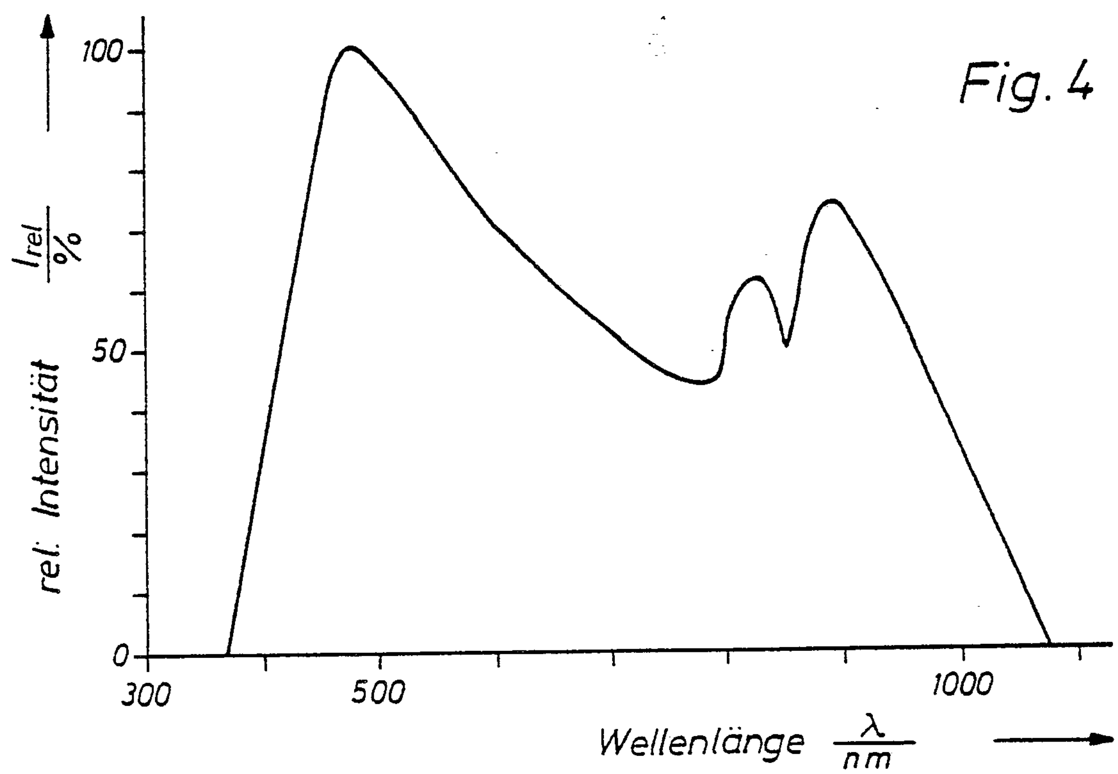
rel. Intensität
$I_{rel}$ / %
100
50
0
300
500
1000
Wellenlänge λ / nm

Fig. 4

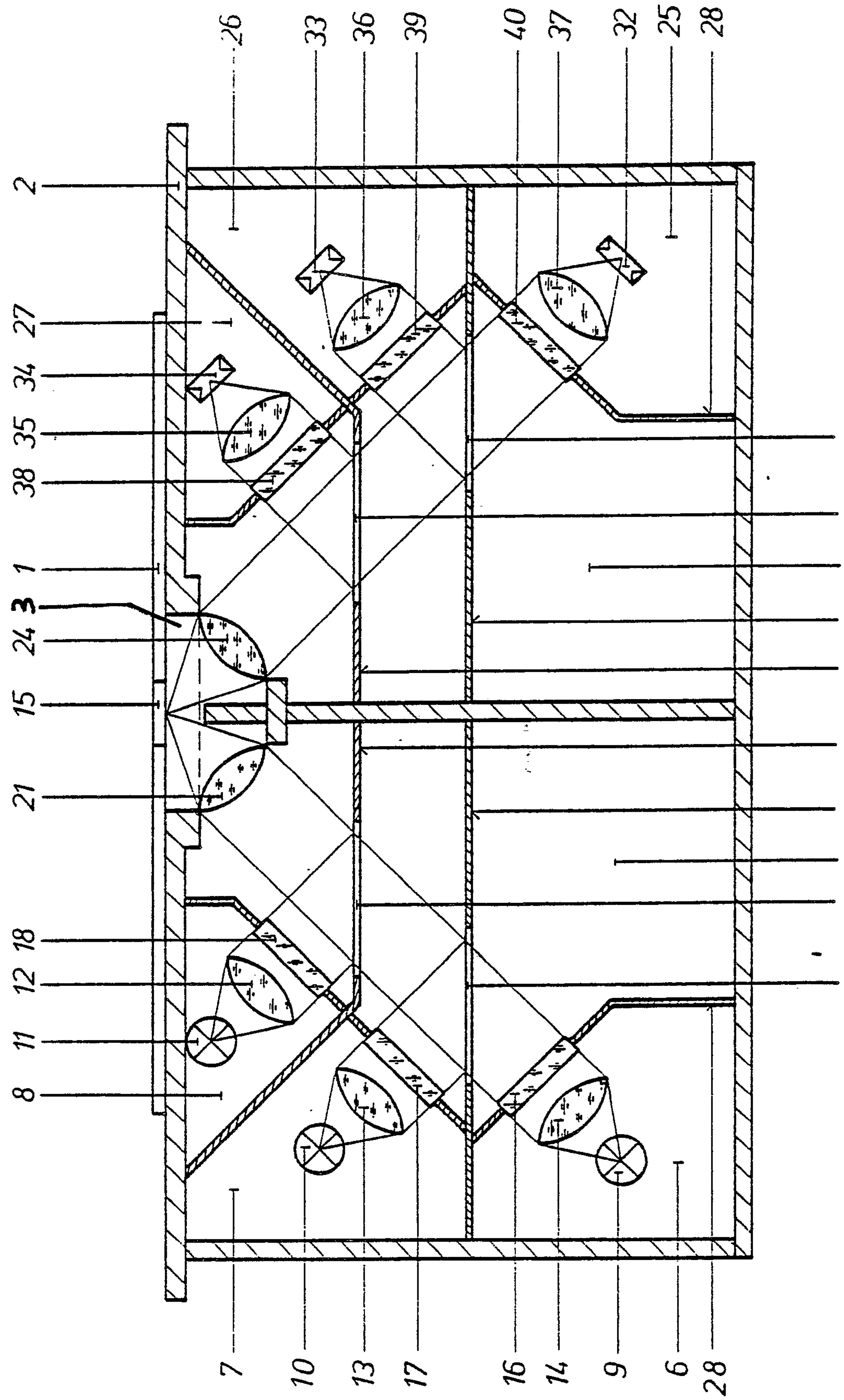
26
33
36
39
40
37
32
25
28
2
27
34
35
38
1
3
24
15
21
18
12
11
8
31
30
5
28
28
28
28
4
19
20
7
10
13
17
16
14
9
6
28

Fig. 6